# EUROPEAN PATENT SPECIFICATION

(11) **EP 2 522 456 B1**
(45) Date of publication and mention of the grant of the patent: **27.08.2014**
(21) Application number: 12166969.1
(22) Date of filing: 07.05.2012
(51) Int. Cl.: B23P 19/06, B27M 3/00, F16B 37/04, F16B 37/06

(54) **Press nut driving machine and method for pressing press nuts into a panel**
Stanzmutter-Treibmaschine und Verfahren zum Einpressen von Stanzmuttern in eine Tafel
Machine de pressage d'écrou embouti et procédé de presse des écrous embuties dans un panneau

(30) Priority: 09.05.2011 NL 2006740
(43) Date of publication of application: 14.11.2012
(73) Proprietor: "Lato" Speciaal Machinebouw & Automatiserings Techniek, 6595 MA Ottersum (NL)
(72) Inventor: Lamers, Antonius Petrus Hendrikus, 6595 MA Ottersum (NL)
(74) Representative: Algemeen Octrooi- en Merkenbureau B.V.

(56) References cited:
- EP-A2- 0 338 117
- DE-A1- 3 937 903
- JP-A- 2008 254 143
- US-A- 5 560 099

## Description

The present invention relates to a press nut driving machine according to the preamble of claim 1.

The present invention further relates to a method for pressing press nuts into a panel using such a machine.

A well-known press nut driving machine has a supporting surface and a manually operable, hydraulically energized striking pin by means of which a press nut can be pressed (driven) into a MDF panel. The panel must be held in the proper position with respect to the striking pin, with the proper flat side of the panel facing the striking pin. After one side of the panel is provided with press nuts, the panel can be inverted and subsequently one or more press nuts can be secured on the other side. Such panels provided with press nuts are employed in large numbers in the automotive industry, for example as a part of sleeping compartments in trucks, as dashboard, or sheeting otherwise.

EP 0 338 117 A2 discloses a riveting apparatus for assembling component parts by means of rivets or similar fasteners.

JP 2008 254143 A discloses a press nut driving machine according to the preamble of claim 1.

A drawback of the above-described, known press nut driving machine resides in that the process of providing press nuts in a panel is very laborious. Therefore, it is an object of the present invention to provide a press nut driving machine by means of which press nuts can be rapidly pressed into a panel.

This object is achieved by means of the press nut driving machine according to the present invention, according to claim 1.

An advantage of the press nut driving machine according to the present invention resides in that, by using the, at least in operation, two nut driving means situated on either side of the panel, said press nut driving machine enables press nuts to be very efficiently pressed into the two opposite sides of a panel, without the panel having to be removed from the press nut driving machine in order to be reversed and subsequently replaced. By virtue thereof, a panel can be rapidly provided with press nuts on both sides.

The second stamping element is also arranged so as to serve as the first supporting element while a press nut is being pressed into the panel by means of the first stamping element, and the first stamping element is also arranged so as to serve as the second supporting element while a press nut is being pressed into the panel by means of the second stamping element. By virtue of said dual function of the first and the second stamping element, the machine has a smaller number of components, leading to a lower cost price of the machine. The first and the second stamping element are in line with one another. Said supporting function can thus be easily fulfilled.

The first nut driving means and the second nut driving means each comprise a flaring element and flaring element moving means, wherein, in operation, the flaring element can be moved away from and towards the panel under the influence of the flaring element moving means, for the purpose of flaring a press nut already pressed into the panel. By using a flaring element, a press nut can be flared and thus more securely fixed in the panel. The term flaring is to be understood to mean the enlarging of the free end (with which the press nut is pressed into the panel) of a press nut after it has been provided in the panel. As a result, the resistance of the nut to being pulled loose increases.

The flaring element of the first nut driving means is arranged to flare a press nut already pressed into the panel by the second stamping element and the flaring element of the second nut driving means is arranged to flare a press nut already pressed into the panel by the first stamping element. This can be carried out in an efficient manner since, as described above, the first and the second stamping element are in line with one another.

The stamping element of one of the first and the second nut driving means is also arranged to serve as a supporting element while a press nut is being flared by means of the flaring element of the other one of the first and the second nut driving means. By virtue thereof, a very high degree of integration of functionality is achieved, thereby simplifying the machine and reducing the risk of failures.

In an advantageous preferred embodiment, the first and/or the second stamping element comprises a body of revolution extending around a centre line and having a passage at the location of the centre line, wherein the associated flaring element extends, in operation, at least partly through the passage. Preferably, the two stamping elements and the two flaring elements are arranged mutually in line, and, further preferably, are concentric with respect to one another. Preferably, the first stamping element and/or the second stamping element are substantially cylindrical. The circumferential surface of the flaring elements is preferably adapted to an inner surface of the associated stamping element, such that the flaring element can be moved along the inner surface of the associated stamping element, having a sliding fit.

The press nut driving machine favourably comprises panel moving means for moving the panel relative to the first and the second nut driving means.

In this respect, it is advantageous if the first and the second nut driving means are rigidly secured to the frame. By virtue thereof, a robust construction can be obtained, enabling the forces occurring during pressing and, if necessary, during flaring, to be taken up to a substantial degree.

For the purpose of increasing the possibility of autonomous operation of the press nut driving machine, the machine is provided with a first nut holder between the first nut driving means and the panel and with a second nut holder between the second nut driving means and the panel, each nut holder being arranged for accommodating a press nut to be pressed in, said machine further comprising nut supply means for selectively placing a press nut in the first or the second nut holder for the purpose of pressing the press nut in question into the panel.

The versatility of the machine increases substantially since the nut supply means comprise a number of magazines for storing a number of types of press nuts, as well as selection means which are operatively connected with the number of magazines and which are arranged for selectively placing an individual press nut of one of the various types in the first or in the second nut holder. By virtue thereof, a panel can be efficiently provided with a plurality of types and sizes of press nuts. Preferably, the selection means comprise separation means for each time separating one press nut originating from one of the number of magazines, the selection means being arranged for selecting a press nut of the desired type from the number of individual press nuts of different type separated by the separation means, and placing it into the first or the second nut holder.

The machine further preferably has individual nut supply means for each nut holder, for selectively placing a press nut in the nut holder in question.

In an advantageous preferred embodiment, the stamping element comprises a piston of a hydraulic dual-action piston/cylinder combination, wherein the stamping element can be moved away from and towards the panel under the influence of energizing of the piston/cylinder combination. By means of such a piston/cylinder combination, on the one hand, the stamping element can be accurately moved. On the other hand, large forces can be generated, resulting in a high press-force.

It is furthermore advantageous if the flaring element comprises a piston of a hydraulic dual-action piston/cylinder combination, wherein the flaring element can be moved away from and towards the panel under the influence of energizing of the piston/cylinder combination.

To further increase the versatility of the machine, it is advantageous if the stamping element and/or the flaring element comprises an exchangeable head.

It is moreover advantageous if the control means are arranged for automatically pressing press nuts into a panel according to a predetermined pattern. This enables full automatic processing of a panel by means of the machine, without the intervention of an operator.

In this respect, it is also advantageous if the machine comprises panel exchange means by means of which a processed panel can be exchanged for a panel yet to be processed, wherein the panel exchange means can be driven by the control means.

The present invention also relates to a method for pressing press nuts into a panel, as defined in claim 10, using the above-described machine according to the present invention.

Dependent upon the panel to be processed, the steps b) and c) can, prior to the steps d) and e), be repeated one or more times. After the steps d) and e) have been carried out, it is possible, dependent upon the panel to be processed, i.e. whether a still further press nut has to be pressed into the panel, to repeat steps b) and c) or to repeat steps d) and e).

The advantages of the method according to the present invention are analogous to the above-described advantages of the press nut driving machine according to the present invention.

For the purpose of step b, the method further comprises the step of bringing the second stamping element just into contact with the panel in order to support the panel while a press nut is being pressed into the panel by means of the first stamping element.

The method further comprises the step of flaring, by means of a flaring element, a press nut already pressed into the panel by means of the first or the second stamping element.

The present invention will be described hereinbelow by means of a preferred embodiment of a press nut driving machine according to the present invention, with reference to the following figures, in which
Figure 1 is a diagrammatic side view of a punching-flaring machine according to the invention;
Figure 2 is a diagrammatic sectional view taken on the line II-II in figure 1; and
Figure 3 is a diagrammatic, partly transparent, front view of the machine according to figure 1.

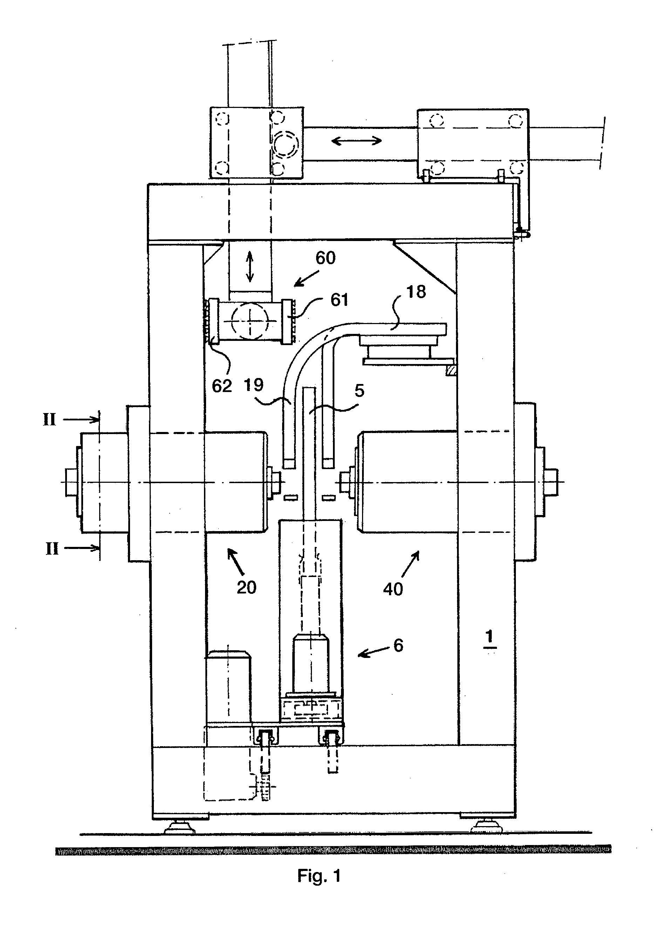

Figure 1 shows a part of a punching-flaring machine as a preferred embodiment of a press nut driving machine according to the present invention. The operation of pressing a press nut into a panel is also referred to as punching. Panels to which the present invention relates are those which can suitably be provided with press nuts, such as, but not exclusively, panels of wood such as MDF or panels of a plastic. Usually, the panels are rectangular with a length of maximally 3000 mm, a width of maximally 1000 mm and thickness ranging from approximately 4 mm to approximately 40 mm.

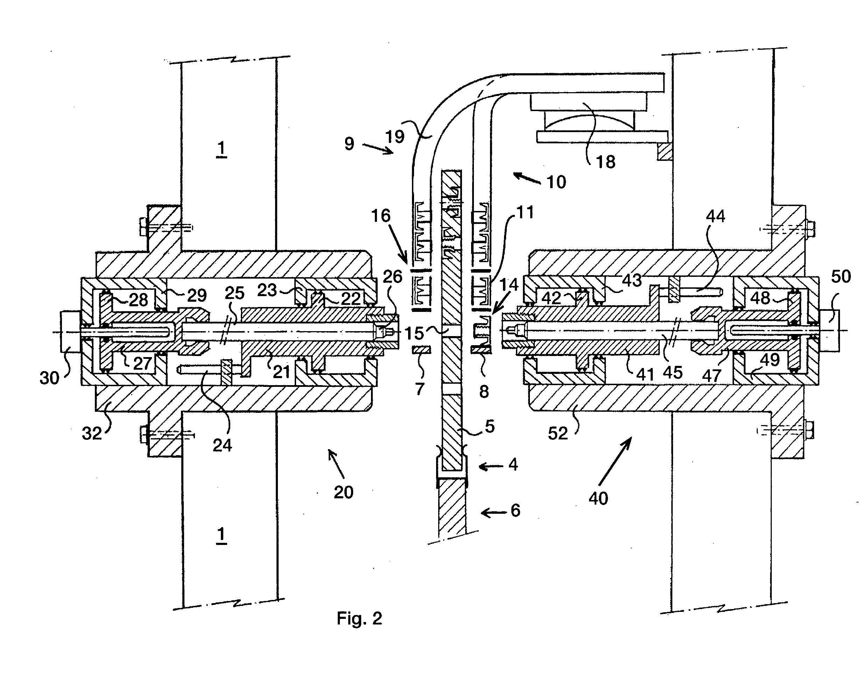

The machine has first nut driving means 20 and second nut driving means 40 which are rigidly connected to a frame 1. See figure 2. The machine further comprises a panel holder 4 onto which a panel 5 to be processed can be rigidly attached. Said panel holder 4 is connected with panel moving means 6 for moving the panel 5 in two directions with respect to the frame 1. Said panel moving means 6 are formed, in the machine shown in the figures, by two spindle drives. The press nut driving machine further comprises control means for driving the panel moving means 6 and the nut driving means 20, 40.

The first and the second nut driving means 20, 40 are arranged so as to face each other in a straight line. Between the two nut driving means 20, 40, there is a space through which a panel 5 to be processed can be moved under the influence of the panel moving means 6. The two nut driving means are (in opposite directions) at right angles to the two flat sides of the panel 5, so that press nuts can be pressed into both sides of the panel 5 by the respective nut driving means 20, 40.

Press nuts are commercially available in a plurality of types and sizes. Usually nuts in the size range of M4 through M10 are applied. Such nuts generally have a head portion and a nut portion connected therewith, wherein, after the nut has been pressed in, the head portion, which may or may not be countersunk, butts against the side of the panel from where the nut has been pressed into the panel, and the nut portion is inside the panel. The head portion may be provided with a few nail-shaped pins which penetrate into the panel while the nut is pressed into the panel and which subsequently preclude rotation of the nut portion with respect to the panel and which more securely fix the press nut in the panel. In order to secure a press nut in a panel, customarily, a hole, mostly a through-hole, has to be pre-drilled in the panel, after which the nut is pressed into the hole so as to be a tight fit or a force fit.

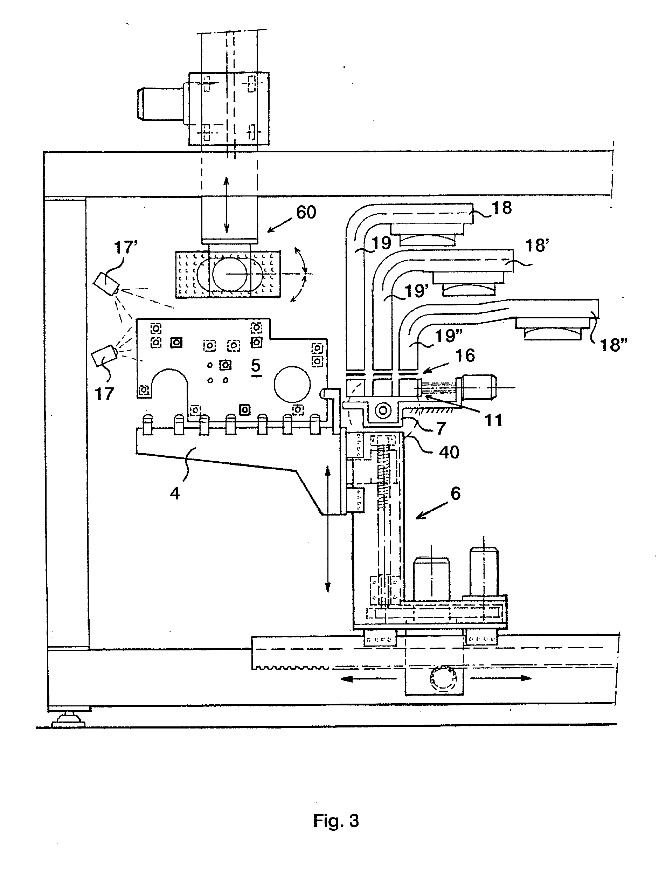

The machine comprises a panel gripper 60 for moving a panel to be processed or a processed panel between one or more storage locations and the panel holder 4, so that the panel gripper can be used to place a panel to be processed into the machine, and a processed panel, i.e. a panel provided with press nuts, can be removed from the panel holder 4 and moved away. See figures 1 and 3. The panel gripper preferably comprises vacuum suction cups for gripping a panel. The panel gripper further preferably has two gripping heads 61, each preferably independently displaceable and rotatable in all directions, so that a first head can be used to remove a panel to be processed from a storage location and transport it to the panel holder. Subsequently, the second head can be used to remove an already processed panel from the panel holder, after which the panel to be processed can be directly placed in the panel holder by means of the first head. Subsequently, preferably while the panel placed in the panel holder is being processed, the already processed panel is stored at a location for finished panels, and further, preferably while the panel placed in the panel holder is being processed, a next panel is already removed from the storage location by the gripper. As a result, the panel-exchange procedure is very efficient and the capacity of the press nut driving machine can be exploited to a very high degree.

The first nut driving means 20 comprise a stamping element 21 which, in the example according to the figures, is embodied so as to be cylindrical. The outer jacket of the cylinder is provided with a flange 22 which serves as a piston of a dual-action piston/cylinder combination. The cylinder is indicated by means of reference numeral 23. By pumping a fluid, preferably a liquid such as oil, on one side or on the other side of the piston 22, into the cylinder 23 (by means of pressure means, which are not shown in more detail in the figures and which are operatively connected with the control means), stamping element 21, at right angles to the panel 5, can be moved from and to the panel 5. The differential pressure across the piston 22 is a measure of the force with which a nut can be pressed into the panel 5.

Second nut driving means 40 are identical to first nut driving means 20, although this is not necessary within the framework of the invention. Corresponding parts as described above and as will be described in greater detail hereinbelow with respect to the first nut driving means 20 are indicated for the second nut driving means 40 by means of the same reference numerals increased by 20.

The first nut driving means 20 further comprise sensor means, for example a distance sensor 24 shown in the figures, for recording the position of stamping element 21. The sensor means are operatively connected with the control means, so that the position of the stamping element can be fed back to the control means and on the basis of this information the pressure means can be driven. Stamping element 21 further comprises a head which can be brought into contact with the panel or with a press nut, which head is exchangeable, allowing the stamping element 21 to be adapted to the type(s) of press nuts to be pressed. Cylindrical stamping element 21 is arranged in line with cylindrical stamping element 41.

The press nut driving machine further comprises nut holders 7, 8 associated with, respectively, the first and the second nut driving means, which are placed right in front of the relevant stamping elements 21, 41, in the space between the respective stamping element 21 or 41 and the panel, and through which or, dependent upon the geometry of the nut holder, along which the relevant stamping element can be moved. The press nut driving machine comprises nut supply means 9, 10 for supplying, under the influence of the control means, a press nut to be pressed in to nut holder 7 or nut holder 8, respectively.

The nut supply means 9 are formed by vibratory feeders 18, 18', 18" serving as magazines and feed troughs 19, 19', 19" extending between the vibratory feeders and the nut holders. In the example as shown in the figures, the press nut driving machine has three vibratory feeders for each nut holder, which vibratoryfeeders can be provided with press nuts of different types. The vibratory feeders associated with the nut holder 7 discharge at nut selection means 11, wherein separation means 16 arranged upstream of said nut selection means and in the direct vicinity thereof, separate each time one press nut originating from one of the number of magazines, said nut selection means being arranged to select, from the number of individual press nuts of different types separated by the separation means, a press nut of the desired type and to place it in the first nut holder 7.

The nut supply means thus allow, under the influence of the control means, a press nut of a predetermined type to be supplied from a vibratory feeder, and separated by means of the separation means, and subsequently selected by means of the selection means and placed in the nut holder 7. Nut supply means 10 are embodied analogous to nut supply means 9, although this is not necessary within the framework of the invention. Nut supply means 9 and 10 thus enable nuts of three different types, at choice, to be supplied on both sides of the panel 5 to nut holder 7 and nut holder 8, respectively,

A panel 5 to be processed is placed by the panel moving means 6, in operation, in a space between the nut driving means 20, 40. A hole pattern predrilled in the panel 5 is pre-programmed in the control means, wherein the type of press nut to be pressed into a specific hole of the hole pattern is also programmed. The panel is placed such that a specific hole is right between the two nut driving means 20, 40. If a nut 14 has to be pressed into hole 15 by means of stamping element 41, then first stamping element 21 is moved towards panel 5, such that it just contacts the panel, so that it serves as a supporting element while the press nut is being pressed in by the stamping element 41. A press nut of a certain type to be pressed into the hole 15 is introduced into the nut holder by means of the separation means and the selection means in the manner described hereinabove. Subsequently, stamping element 41 is moved towards panel 5 in order to press the press nut 14 into the hole 15. After the nut has been pressed into the panel, the panel is moved by means of the panel moving means such that a new hole is placed between the nut driving means 20, 40. Dependent upon the side of the panel 5 into which the nut must be pressed, a nut is placed in nut holder 7 or nut holder 8, after which the stamping element situated on the opposite side of the panel is used as a supporting element as described hereinabove. The nut is pressed into the panel by the stamping element situated on the side of the nut.

The press nut driving machine comprises inspection means which, in the example of the press nut driving machine shown in the figures, are formed by two cameras 17, 17' by means of which the panel, after processing thereof or, if required, during processing thereof, can be checked for the presence of the proper press nuts in the proper positions. For this purpose, the cameras are operatively connected with the control means.

The first nut driving means 20 further comprise a flaring element 25. The second nut driving means 40 comprise a flaring element 45. Flaring element 25 is pin-shaped and has a free end portion 26 oriented in the direction of the panel, which end portion is adapted to at least one type of press nut. In the example shown in the figures, end portion 26 is provided with two steps, so that the flaring element is suitable for flaring three types of press nuts of mutually different sizes, i.e. for example M5, M6 and M8.

Flaring element 25 is concentrically and in a sliding manner arranged inside the cylindrical stamping element 21; it extends at least partly through said stamping element, and by means of flaring element moving means it can be moved away from and towards the panel 5, independently of the stamping element 21, for flaring a press nut already pressed into the panel 5. The flaring element moving means comprise a cylinder 27 connected with the flaring element 25, which cylinder, analogous to the stamping element 21, has a flange 28 which forms the piston of a dual-action piston/cylinder combination, the cylinder being indicated by means of reference numeral 29. Flaring element 25 is detachably connected with cylinder 27, so that the former can be exchanged in dependence on the type(s) of press nuts to be flared.

Sensor means, formed by distance sensor 30, which is operatively connected with the control means, enable accurate movement of the flaring element by feeding back information on the position of the flaring element to the control means. The differential pressure across piston 28 is a measure of the flaring force. The assembly of stamping element 21, flaring element 25 and the associated piston/cylinder combinations is arranged in a cylindrical securing part 32 which is rigidly connected with the frame 1. Cylinders 23 and 29 are rigidly arranged inside said part 32.

If a nut which has been pressed into the panel 5 in the manner described above has to be flared, the stamping element by means of which the relevant press nut 14 has been pressed into the hole 15 of the panel 5, i.e. in the above example, the second stamping element 41, remains in contact with the head of the press nut 14, as a result of which the second stamping element 41 serves as a supporting element during the flaring operation. Flaring element 25 is moved towards the panel under the influence of the flaring element moving means until the head of the flaring element contacts, in hole 15, the free end portion of press nut 14 facing flaring element 25. By moving flaring element 25 further in the direction of the first stamping element 21, the edge of the end portion of nut 14 is widened such that it penetrates into the material of the wall of hole 15, thereby very fixedly securing the nut in the panel. A press nut thus flared can be subjected to high loads from two sides.

If a certain type of press does not need to be flared, the flaring elements remain inactive, i.e. retracted within the associated stamping element. In order to position the panel 5 even more accurately right in front of the stamping element to be used, i.e. such that the centre line of a hole, such as hole 15, is concentric with the centre line of stamping elements 21, 41, or to check the position of the panel positioned by means of the panel moving means, the flaring element, if it is provided with a suitable head, can also be used as a centering element. The head of the centering element is then moved until it is inside the hole 15 and contacts an edge or a wall of said hole.

## Claims

1. A press nut driving machine comprising a frame (1) on which a panel (5) to be processed can be placed, first nut driving means (20) connected with the frame and comprising a first stamping element (21) for, in operation, pressing a press nut into a first side of the panel, and moving means (22, 23) for moving the first stamping element (21) away from and towards the panel (5), the machine further comprising a first supporting element which cooperates with the first nut driving means (20) for, in operation, supporting the panel (5) while a press nut is being pressed into the panel by means of the first stamping element (21), second nut driving means (40) connected with the frame (1) and comprising a second stamping element (41) for, in operation, pressing a press nut into a second side, opposite to the first side, of the panel (5), and a second supporting element which cooperates with the second nut driving means (40) for, in operation, supporting the panel (5) while a press nut is being pressed into the panel by means of the second stamping element (41),
**characterized in that** the press nut driving machine comprises moving means (42, 43) for, in operation, moving the second stamping element (41) away from and towards the panel (5), and control means for driving the first and the second moving means, wherein the second stamping element (41) is also arranged so as to serve as the first supporting element while a press nut is being pressed into the panel (5) by means of the first stamping element (21), and wherein, the first stamping element (21) is also arranged so as to serve as the second supporting element while a press nut is being pressed into the panel (5) by means of the second stamping element (41), the first and second stamping elements (21; 41) being in line with each other, wherein the first nut driving means (20) and the second nut driving means (40) each comprise a flaring element (25; 45) and flaring element moving means (27, 28, 29; 47, 48, 49), wherein, in operation, the flaring element (25; 45) can be moved away from and towards the panel (5) under the influence of the flaring element moving means, for the purpose of flaring a press nut already pressed into the panel (5), wherein the flaring element (25) of the first nut driving means (20) is arranged to flare a press nut already pressed into the panel (5) by the second stamping element (41), and wherein the flaring element (45) of the second nut driving means (40) is arranged to flare a press nut already pressed into the panel (5) by the first stamping element (21), wherein the stamping element (21; 41) of one of the first and the second nut driving means (20; 40) is also arranged to serve as a supporting element while a press nut is being flared by means of the flaring element (25; 45) of the other one of the first and the second nut driving means (20; 40), wherein the machine comprises a first nut holder (7) between the first nut driving means (20) and the panel (5) and a second nut holder (8) between the second nut driving means (40) and the panel, each nut holder (7; 8), being arranged for accommodating a press nut to be pressed in, said machine further comprising nut supply means (9; 10) for selectively placing a press nut in the first or the second nut holder (7; 8) for the purpose of pressing the press nut in question into the panel (5), wherein the nut supply means (9; 10) comprise a number of magazines (18, 18', 18") for storing a number of types of press nuts, as well as selection means (11) which are operatively connected with the number of magazines and which are arranged for selectively placing an individual press nut of one of the various types in the first or in the second nut holder (7; 8).

2. A press nut driving machine according to claim 1, wherein the first and/or the second stamping element (21; 41) comprises a body of revolution extending around a centre line and having a passage at the location of the centre line, wherein the associated flaring element (25; 45) extends, in operation, at least partly through the passage.

3. A press nut driving machine according to any one of the preceding claims, wherein the machine comprises panel moving means (6) for moving the panel (5) relative to the first and the second nut driving means (20; 40), wherein preferably the first and the second nut driving means (20; 40) are rigidly secured to the frame (1).

4. A press nut driving machine according to any one of the preceding claims, wherein the stamping element (21; 41) comprises a piston (22; 42) of a hydraulic dual-action piston/cylinder combination (22, 23; 42, 43), wherein the stamping element can be moved away from and towards the panel (5) under the influence of energizing the piston/cylinder combination, wherein, preferably, the flaring element (25; 45) comprises a piston (28; 48) of a hydraulic dual-action piston/cylinder combination (28, 29; 48, 49), wherein the flaring element can be moved away from and towards the panel under the influence of energizing the piston/cylinder combination.

5. A press nut driving machine according to any one of the preceding claims, wherein the stamping element (21; 41) and/or the flaring element (25; 45) comprises an exchangeable head.

6. A press nut driving machine according to any one of the preceding claims, wherein the control means are arranged for automatically pressing press nuts into a panel according to a predetermined pattern.

7. A press nut machine according to any one of the preceding claims, wherein the selection means (11) comprise separation means (16) for each time separating one press nut originating from one of the number of magazines (18, 18', 18"), the selection means (11) being arranged for selecting a press nut of the desired type from the number of individual press nuts of different type separated by the separation means (16), and placing it into the first or the second nut holder (7; 8).

8. A press nut machine according to any one of the preceding claims, having individual nut supply means (9; 10) for each nut holder (7; 8), for selectively placing a press nut in the nut holder in question.

9. A press nut machine according to any one of the preceding claims, wherein the flaring element (25; 45) is pin-shaped and has a free end portion (26) oriented in the direction of the panel, which end portion (26) is provided with two steps, so that the flaring element is suitable for flaring three types of press nuts of mutually different sizes.

10. A method for pressing press nuts into a panel, using the machine according to any one of the preceding claims, said method comprising the following, successive steps of:
a) placing a panel (5) to be processed on the frame (1) of the machine,
b) supporting the panel, by means of the first supporting element, in the direct vicinity of a position where a press nut is to be pressed into the panel,
c) at said location, pressing the press nut into a first side of the panel by means of the first stamping element (21),
d) supporting the panel, by means of the second supporting element, in the direct vicinity of a further position where a further press nut is to be pressed into the panel,
e) at said further location, pressing the further press nut into a second side opposite the first side of the panel by means of the second stamping element (41),
the method further comprising, for the purpose of step b, the step of bringing the second stamping element (41) just into contact with the panel in order to support the panel while a press nut is being pressed into the panel by means of the first stamping element (21), and the step of flaring, by means of a flaring element (25; 45), a press nut already pressed into the panel by means of the first or the second stamping element (21; 41).

## Patentansprüche

1. Einpressmutter-Antriebsmaschine umfassend einen Rahmen (1), auf dem ein zu bearbeitendes Paneel (5) platziert werden kann, erste Mutterantriebsmittel (20), die mit dem Rahmen verbunden sind und ein erstes Stanzelement (21) umfassen, um im Betrieb eine Einpressmutter in eine erste Seite des Paneels zu pressen, und Bewegungsmittel (22, 23) zum Bewegen des ersten Stanzelements (21) von dem Paneel (5) weg und zu diesem hin, wobei die Maschine ferner ein erstes Stützelement umfasst, das mit den ersten Mutterantriebsmitteln (20) zusammenwirkt, um im Betrieb das Paneel (5) zu stützen, während eine Einpressmutter mit Hilfe des ersten Stanzelements (21) in das Paneel gepresst wird, zweite Mutterantriebsmittel (40), die mit dem Rahmen (1) verbunden sind und ein zweites Stanzelement (41) umfassen, um im Betrieb eine Einpressmutter in eine der ersten Seite entgegengesetzte zweite Seite des Paneels (5) zu pressen, und ein zweites Stützelement, das mit den zweiten Mutterantriebsmitteln (40) zusammenwirkt, um im Betrieb das Paneel (5) zu stützen, während eine Einpressmutter mit Hilfe des zweiten Stanzelements (41) in das Paneel gepresst wird,
**dadurch gekennzeichnet, dass** die Einpressmutter-Antriebsmaschine Bewegungsmittel (42, 43) umfasst, um im Betrieb das zweite Stanzelement (41) von dem Paneel (5) weg und zu diesem hin zu bewegen, sowie Steuermittel zum Ansteuern des ersten und des zweiten Bewegungsmittels, wobei das zweite Stanzelement (41) außerdem dazu ausgelegt ist, als erstes Stützelement zu dienen, während eine Einpressmutter mit Hilfe des ersten Stanzelements (21) in das Paneel (5) gepresst wird, und wobei das erste Stanzelement (21) außerdem dazu ausgelegt ist, als zweites Stützelement zu dienen, während eine Einpressmutter mit Hilfe des zweiten Stanzelements (41) in das Paneel (5) gepresst wird, wobei das erste und das zweite Stanzelement (21; 41) **in einer Linie angeordnet** sind, wobei das erste Mutterantriebsmittel (20) und das zweite Mutterantriebsmittel (40) jeweils ein Bördelelement (25; 45) sowie Bördelelementbewegungsmittel (27, 28, 29; 47, 48, 49) umfassen, wobei das Bördelelement (25; 45) im Betrieb unter dem Einfluss der Bördelelementbewegungsmittel von dem Paneel (5) weg und zu diesem hin bewegt werden kann, um eine bereits in das Paneel (5) gepresste Einpressmutter zu bördeln, wobei das Bördelelement (25) der ersten Mutterantriebsmittel (20) dazu ausgelegt ist, eine durch das zweite Stanzelement (41) bereits in das Paneel (5) gepresste Einpressmutter zu bördeln, und wobei das Bördelelement (45) der zweiten Mutterantriebsmittel (40) dazu ausgelegt ist, eine durch das erste Stanzelement (21) bereits in das Paneel (5) gepresste Einpressmutter zu bördeln, wobei das Stanzelement (21; 41) des ersten oder des zweiten Mutterantriebsmittels (20; 40) außerdem dazu ausgelegt ist, als Stützelement zu dienen, während eine Einpressmutter mit Hilfe des Bördelelements (25; 45) des anderen von dem ersten und dem zweiten Mutterantriebsmittel (20; 40) gebördelt wird, wobei die Maschine eine erste Mutterhalterung (7) zwischen dem ersten Mutterantriebsmittel (20) und dem Paneel (5) sowie eine zweite Mutterhalterung (8) zwischen dem zweiten Mutterantriebsmittel (40) und dem Paneel umfasst, wobei jede Mutterhalterung (7; 8) dazu ausgelegt ist, eine einzupressende Einpressmutter aufzunehmen, wobei die Maschine ferner Mutterzuführmittel (9; 10) umfasst, um eine Einpressmutter wahlweise in die erste oder die zweite Mutterhalterung (7; 8) einzulegen, um die fragliche Einpressmutter in das Paneel (5) zu pressen, wobei die Mutterzuführmittel (9; 10) eine Anzahl von Magazinen (18, 18', 18") umfassen, um eine Anzahl verschiedener Arten von Einpressmuttern aufzubewahren, sowie Auswahlmittel (11), die funktionsmäßig mit der Anzahl von Magazinen verbunden sind und die dazu ausgelegt sind, eine einzelne Einpressmutter einer der verschiedenen Arten wahlweise in die erste oder in die zweite Mutterhalterung (7; 8) einzulegen.

2. Einpressmutter-Antriebsmaschine nach Anspruch 1, wobei das erste und/oder das zweite Stanzelement (21; 41) einen **Rotationskörper** umfasst, der sich um eine Mittellinie erstreckt und am Ort der Mittellinie einen Kanal aufweist, wobei sich das zugehörige Bördelelement (25; 45) im Betrieb wenigstens teilweise durch den Kanal erstreckt.

3. Einpressmutter-Antriebsmaschine nach einem der vorhergehenden Ansprüche, wobei die Maschine Paneelbewegungsmittel (6) umfasst, um das Paneel (5) relativ zu dem ersten und dem zweiten Mutterantriebsmittel (20; 40) zu bewegen, wobei das erste und das zweite Mutterantriebsmittel (20; 40) vorzugsweise starr an dem Rahmen (1) befestigt sind.

4. Einpressmutter-Antriebsmaschine nach einem der vorhergehenden Ansprüche, wobei das Stanzelement (21; 41) einen Kolben (22; 42) einer hydraulischen doppeltwirkenden Kolben/Zylinder-Kombination (22, 23; 42, 43) umfasst, wobei das Stanzelement unter dem Einfluss der Aktivierung der Kolben/Zylinder-Kombination von dem Paneel (5) weg und zu diesem hin bewegt werden kann, wobei das Bördelelement (25; 45) vorzugsweise einen Kolben (28; 48) einer hydraulischen doppeltwirkenden Kolben/Zylinder-Kombination (28, 29; 48, 49) umfasst, wobei das Bördelelement unter dem Einfluss der Aktivierung der Kolben/Zylinder-Kombination von dem Paneel weg und zu diesem hin bewegt werden kann.

5. Einpressmutter-Antriebsmaschine nach einem der vorhergehenden Ansprüche, wobei das Stanzelement (21; 41) und/oder das Bördelelement (25; 45) einen austauschbaren Kopf umfasst.

6. Einpressmutter-Antriebsmaschine nach einem der vorhergehenden Ansprüche, wobei die Steuermittel dazu ausgelegt sind, Einpressmuttern automatisch nach einem vorbestimmten Muster in ein Paneel zu pressen.

7. Einpressmutter-Antriebsmaschine nach einem der vorhergehenden Ansprüche, wobei die Auswahlmittel (11) Trennmittel (16) umfassen, um jedes Mal eine aus einem der Anzahl von Magazinen (18, 18', 18") stammende Einpressmutter abzutrennen, wobei die Auswahlmittel (11) dazu ausgelegt sind, eine Einpressmutter des gewünschten Typs aus der durch die Trennmittel abgetrennten Anzahl einzelner Einpressmuttern unterschiedlichen Typs auszuwählen und diese in die erste oder die zweite Mutterhalterung (7, 8) einzulegen.

8. Einpressmutter-Antriebsmaschine nach einem der vorhergehenden Ansprüche mit einzelnen Mutterzuführmitteln (9; 10) für jede Mutterhalterung (7; 8), um wahlweise eine Einpressmutter in die fragliche Mutterhalterung einzulegen.

9. Einpressmutter-Antriebsmaschine nach einem der vorhergehenden Ansprüche, wobei das Bördelelement (25; 45) stiftförmig ist und einen in Richtung des Paneels ausgerichteten freien Endabschnitt (26) aufweist, der mit zwei Stufen versehen ist, so dass sich das Bördelelement zum Bördeln von drei Arten von Einpressmuttern jeweils unterschiedlicher Größe eignet.

10. Verfahren zum Einpressen von Einpressmuttern in ein Paneel unter Verwendung der Maschine nach einem der vorhergehenden Ansprüche, wobei das Verfahren nacheinander die folgenden Schritte umfasst:
a) Platzieren eines zu bearbeitenden Paneels (5) auf dem Rahmen (1) der Maschine,
b) Stützen des Paneels, mit Hilfe des ersten Stützelements, in unmittelbarer Nähe einer Position, wo eine Einpressmutter in das Paneel zu pressen ist,
c) an dieser Stelle Einpressen der Einpressmutter in eine erste Seite des Paneels mit Hilfe des ersten Stanzelements (21),
d) Stützen des Paneels, mit Hilfe des zweiten Stützelements, in unmittelbarer Nähe einer weiteren Position, wo eine weitere Einpressmutter in das Paneel zu pressen ist,
e) an dieser weiteren Stelle Einpressen der weiteren Einpressmutter in eine der ersten Seite des Paneels entgegengesetzte zweite Seite mit Hilfe des zweiten Stanzelements (41),
wobei das Verfahren ferner, für den Zweck von Schritt b), den Schritt umfasst, bei dem das zweite Stanzelement (41) genau in Kontakt mit dem Paneel gebracht wird, um das Paneel zu stützen, während eine Einpressmutter mit Hilfe des ersten Stanzelements (21) in das Paneel gepresst wird, und den Schritt, bei dem eine mit Hilfe des ersten oder des zweiten Stanzelements (21; 41) bereits in das Paneel gepresste Einpressmutter mit Hilfe eines Bördelelements (25; 45) gebördelt wird.

## Revendications

1. Machine d'entraînement d'écrou embouti comprenant un cadre (1) sur lequel un panneau (5) à traiter peut être placé, un premier moyen d'entraînement d'écrou (20) relié au cadre et comprenant un premier élément d'emboutissage (21) pour, en utilisation, presser un écrou embouti dans un premier côté du panneau, et un moyen de déplacement (22, 23) pour déplacer le premier élément d'emboutissage (21) à l'écart du panneau (5) et vers celui-ci, la machine comprenant en outre un premier élément de support qui coopère avec le premier moyen d'entraînement d'écrou (20) pour, en utilisation, supporter le panneau (5) pendant qu'un écrou embouti est pressé dans le panneau par le biais du premier élément d'emboutissage (21), un deuxième moyen d'entraînement d'écrou (40) relié au cadre (1) et comprenant un deuxième élément d'emboutissage (41) pour, en utilisation, presser un écrou embouti dans un deuxième côté, à l'opposé du premier côté, du panneau (5), et un deuxième élément de support qui coopère avec le deuxième moyen d'entraînement d'écrou (40) pour, en utilisation, supporter le panneau (5) pendant qu'un écrou embouti est pressé dans le panneau par le biais du deuxième élément d'emboutissage (41),
**caractérisée en ce que** la machine d'entraînement d'écrou embouti comprend un moyen de déplacement (42, 43) pour, en utilisation, déplacer le deuxième élément d'emboutissage (41) à l'écart du panneau (5) et vers celui-ci, et un moyen de commande pour entraîner les premier et deuxième moyens de déplacement, dans laquelle le deuxième élément d'emboutissage (41) est également agencé de manière à servir de premier élément de support pendant qu'un écrou embouti est pressé dans le panneau (5) par le biais du premier élément d'emboutissage (21), et dans laquelle le premier élément d'emboutissage (21) est également agencé de manière à servir de deuxième élément de support pendant qu'un écrou embouti est pressé dans le panneau (5) par le biais du deuxième élément d'emboutissage (41), les premier et deuxième éléments d'emboutissage (21 ; 41) étant alignés l'un avec l'autre, dans lequel le premier moyen d'entraînement d'écrou (20) et le deuxième moyen d'entraînement d'écrou (40) comprennent chacun un élément d'évasement (25 ; 45) et un moyen de déplacement d'élément d'évasement (27, 28, 29 ; 47, 48, 49), dans laquelle, en utilisation, l'élément d'évasement (25 ; 45) peut être déplacé à l'écart du panneau (5) et vers celui-ci sous l'influence du moyen de déplacement d'élément d'évasement, dans le but d'évaser un écrou embouti déjà pressé dans le panneau (5), dans laquelle l'élément d'évasement (25) du premier moyen d'entraînement d'écrou (20) est agencé pour évaser un écrou embouti déjà pressé dans le panneau (5) par le deuxième élément d'emboutissage (41), et dans laquelle l'élément d'évasement (45) du deuxième moyen d'entraînement d'écrou (40) est agencé pour évaser un écrou embouti déjà pressé dans le panneau (5) par le premier élément d'emboutissage (21), dans laquelle l'élément d'emboutissage (21 ; 41) de l'un des premier et deuxième moyens d'entraînement d'écrou (20 ; 40) est également agencé pour servir d'élément de support pendant qu'un écrou embouti est en cours d'évasement par le biais de l'élément d'évasement (25 ; 45) de l'autre des premier et deuxième moyens d'entraînement d'écrou (20 ; 40), dans laquelle la machine comprend un premier porte-écrou (7) entre le premier moyen d'entraînement d'écrou (20) et le panneau (5) et un deuxième porte-écrou (8) entre le deuxième moyen d'entraînement d'écrou (40) et le panneau, chaque porte-écrou (7 ; 8) étant agencé pour recevoir un écrou embouti à presser dedans, ladite machine comprenant en outre un moyen d'alimentation en écrou (9 ; 10) pour placer sélectivement un écrou embouti dans le premier ou le deuxième porte-écrou (7 ; 8) dans le but de presser l'écrou embouti en question dans le panneau (5), dans laquelle le moyen d'alimentation en écrou (9 ; 10) comprend un certain nombre de magasins (18, 18', 18") pour stocker un certain nombre de types d'écrous emboutis, ainsi qu'un moyen de sélection (11) qui est relié de manière opérationnelle au certain nombre de magasins et est agencé pour placer sélectivement un écrou embouti individuel de l'un des divers types dans le premier ou le deuxième porte-écrou (7 ; 8).

2. Machine d'entraînement d'écrou embouti selon la revendication 1, dans laquelle le premier élément d'emboutissage et/ou le deuxième élément d'emboutissage (21 ; 41) comprennent un corps de rotation s'étendant autour d'une ligne centrale et ayant un passage à l'emplacement de la ligne centrale, dans laquelle l'élément d'évasement associé (25 ; 45) s'étend, en utilisation, au moins partiellement à travers le passage.

3. Machine d'entraînement d'écrou embouti selon l'une quelconque des revendications précédentes, dans laquelle la machine comprend un moyen de déplacement de panneau (6) pour déplacer le panneau (5) par rapport aux premier et deuxième moyens d'entraînement d'écrou (20 ; 40), dans laquelle de préférence les premier et deuxième moyens d'entraînement d'écrou (20 ; 40) sont fixés rigidement au cadre (1).

4. Machine d'entraînement d'écrou embouti selon l'une quelconque des revendications précédentes, dans laquelle l'élément d'emboutissage (21 ; 41) comprend un piston (22 ; 42) d'une combinaison de piston/vérin hydraulique à double action (22, 23 ; 42, 43), dans laquelle l'élément d'emboutissage peut être déplacé à l'écart du panneau (5) et vers celui-ci sous l'influence de la sollicitation de la combinaison de piston/vérin, dans laquelle, de préférence, l'élément d'évasement (25 ; 45) comprend un piston (28 ; 48) d'une combinaison de piston/vérin hydraulique à double action (28, 29 ; 48, 49), dans laquelle l'élément d'évasement peut être déplacé à l'écart du panneau et vers celui-ci sous l'influence de la sollicitation de la combinaison de piston/cylindre.

5. Machine d'entraînement d'écrou embouti selon l'une quelconque des revendications précédentes, dans laquelle l'élément d'emboutissage (21 ; 41) et/ou l'élément d'évasement (25 ; 45) comprennent une tête échangeable.

6. Machine d'entraînement d'écrou embouti selon l'une quelconque des revendications précédentes, dans laquelle le moyen de commande est agencé pour presser automatiquement les écrous emboutis dans un panneau selon un motif prédéterminé.

7. Machine d'entraînement d'écrou embouti selon l'une quelconque des revendications précédentes, dans laquelle le moyen de sélection (11) comprend un moyen de séparation (16) pour séparer à chaque fois un écrou embouti provenant de l'un du certain nombre de magasins (18, 18', 18"), le moyen de sélection (11) étant agencé pour sélectionner un écrou embouti du type souhaité parmi le certain nombre d'écrous emboutis individuels de type différent séparés par le moyen de séparation (16), et le placer dans le premier ou le deuxième porte-écrou (7 ; 8).

8. Machine d'entraînement d'écrou embouti selon l'une quelconque des revendications précédentes, comportant un moyen d'alimentation en écrou individuel (9 ; 10) pour chaque porte-écrou (7 ; 8) pour placer sélectivement un écrou embouti dans le porte-écrou en question.

9. Machine d'entraînement d'écrou embouti selon l'une quelconque des revendications précédentes, dans laquelle l'élément d'évasement (25 ; 45) est en forme de broche et comporte une portion d'extrémité libre (26) orientée dans la direction du panneau, laquelle portion d'extrémité (26) est pourvue de deux pas de sorte que l'élément d'évasement soit apte à évaser trois types d'écrous emboutis de tailles différentes entre elles.

10. Procédé pour presser des écrous emboutis dans un panneau, en utilisant la machine selon l'une quelconque des revendications précédentes, ledit procédé comprenant les étapes successives suivantes :
a) le placement d'un panneau (5) à traiter sur le cadre (1) de la machine,
b) le support du panneau, par le biais du premier élément de support, à proximité directe d'une position à laquelle un écrou embouti doit être pressé dans le panneau,
c) au dit emplacement, le pressage de l'écrou embouti dans un premier côté du panneau par le biais du premier élément d'emboutissage (21),
d) le support du panneau, par le biais du deuxième élément de support, à proximité directe d'une autre position à laquelle un autre écrou embouti doit être pressé dans le panneau,
e) au dit autre emplacement, le pressage de l'autre écrou embouti dans un deuxième côté opposé au premier côté du panneau par le biais du deuxième élément d'emboutissage (41),
le procédé comprenant en outre, aux fins de l'étape b, l'étape consistant à mettre le deuxième élément d'emboutissage (41) juste en contact avec le panneau pour supporter le panneau pendant qu'un écrou embouti est pressé dans le panneau par le biais du premier élément d'emboutissage (21), et l'étape consistant à évaser, par le biais d'un élément d'évasement (25 ; 45), un écrou embouti déjà pressé dans le panneau par le biais du premier ou du deuxième élément d'emboutissage (21 ; 41).
